# EUROPÄISCHE PATENTSCHRIFT

(11) **EP 2 715 256 B1**
(45) Veröffentlichungstag und Bekanntmachung des Hinweises auf die Patenterteilung: **10.07.2019**
(21) Anmeldenummer: 12723463.1
(22) Anmeldetag: 23.05.2012
(51) Int. Cl.: F25D 23/06, F16B 5/06, F16B 5/12

(54) **HAUSHALTSKÄLTEGERÄT MIT EINER STIRNLEISTE**
DOMESTIC REFRIGERATOR WITH AN END STRIP
APPAREIL FRIGORIFIQUE AVEC UN BANDEAU FRONTAL

(30) Priorität: 25.05.2011 DE 102011076486
(43) Veröffentlichungstag der Anmeldung: 09.04.2014
(73) Patentinhaber: BSH Hausgeräte GmbH, 81739 München (DE)
(72) Erfinder: GLASER, Benjamin, 89415 Lauingen (Donau) (DE); GÖRZ, Alexander, 73432 Aalen (DE); GERSTNER, Silvia, 89129 Langenau (DE); SCHUNDNER, Peter, 89537 Giengen (DE)
(86) Internationale Anmeldenummer: PCT/EP2012/059579
(87) Internationale Veröffentlichungsnummer: WO 2012/160086

(56) Entgegenhaltungen:
- DE-A1- 1 654 593
- DE-A1- 10 358 733
- DE-A1-102007 062 024
- DE-A1-102009 028 789
- DE-U- 7 334 203
- GB-A- 1 590 246
- US-A- 3 107 389
- US-A- 3 416 282

## Beschreibung

Die Erfindung betrifft ein Kältegerät, insbesondere Haushaltskältegerät, aufweisend einen wärmeisolierten, einen kühlbaren Innenraum begrenzenden, ein erstes Gerätebauteil bildenden Innenbehälter, an dem ein rahmenartig umlaufender, eine Oberfläche aufweisender Außenrand ausgebildet ist, wenigstens ein weiteres Gerätebauteil und eine den Innenbehälter mit dem weiteren Gerätebauteil verbindende Stirnleiste, die zu ihrer Befestigung an dem Außenrand des Innenbehälters eine Klemmeinrichtung aufweist, die eine den Außenrand des Innenbehälters an ihrer Außenkante umgreifende Federlasche umfasst, welche an einer der Oberfläche des Außenrands zuweisenden Innenwand der Federlasche mehrere Rastzähne aufweist.

Aus der DE 103 58 733 A1 ist ein Gehäuse für ein Haushaltsgerät bekannt, das wenigstens zwei Gehäuseteile, die an einer Schnittstelle miteinander verbunden sind, umfasst. Die Schnittstelle ist als ein Klammerteil ausgebildet, das an einem ersten der Gehäuseteile befestigt ist und den Außenrand des zweiten Gehäuseteils in Bezug auf das erste Gehäuseteil positioniert. Das Klammerteil umfasst einen U-Profilabschnitt mit Federlaschen, bei dem eine Federlasche eine Feder zur Positionierung am Außenrand bildet.

DE 73 34 203 U offenbart ein Verbindungsprofil aus Kunststoff zur Herstellung von Kühl- und Tiefkühlzellen.

Der Erfindung liegt die Aufgabe zugrunde, Gehäuseteile eines Kältegeräts, insbesondere Haushaltskältegeräts, sicher zueinander zu positionieren.

Unter einem Kältegerät wird insbesondere ein Haushaltskältegerät verstanden, also ein Kältegerät das zur Haushaltsführung in Haushalten oder eventuell auch im Gastronomiebereich eingesetzt wird, und insbesondere dazu dient Lebensmittel und/oder Getränke in haushaltsüblichen Mengen bei bestimmten Temperaturen zu lagern, wie beispielsweise ein Kühlschrank, ein Gefrierschrank, eine Kühlgefrierkombination oder ein Weinlagerschrank.

Die Lösung dieser Aufgabe erfolgt mit einem Kältegerät nach Anspruch 1.

Die Stirnleiste kann insbesondere ein Stanzbiegeteile aus Stahlblech sein. Die Stirnleiste kann ein grundlegendes Bauteile eines Kältegeräts bilden und insbesondere die auch folgenden Funktionen abdecken: An der Stirnleiste können Hinterlegteile befestigt sein, an denen beispielsweise Türscharniere und Seitenwände des Kältegeräts angeschraubt werden. Die Stirnleiste kann zusammen mit den Seitenwänden die Ober-/Unterkante des Kältegeräts bilden. Die Stirnleiste kann als Aufnahme dienen bzw. bildet ein Trägerteil für unterschiedliche elektronische Komponenten, wie z.B. eine Bedienelektronik, Sensoren und/oder Schalter. Die Stirnleiste kann außerdem zusammen mit den Seitenwänden an der Gerätefront eine metallische Auflagefläche für die magnetische Türdichtung bilden. Die Seitenwände, die Türscharniere, die Hinterlegteile und/oder die elektronische Komponenten können dabei die weiteren Gerätebauteil bilden.

Die erfindungsgemäß ausgebildeten Rastzähne können eine verbesserte Fixierung des Klemmteils an dem Außenrand des Innenbehälters bewirken, insbesondere aufgrund des unterschiedlichen Abstands der Rastzähne von der Außenkante. Damit kann sichergestellt sein, dass bspw. bei einem unregelmäßig ausgebildeten Außenrand des Innenbehälters wenigsten ein Teil aller Rastzähne mit dem Rand in Eingriff stehen. Die Rastzähne können vollständig in unterschiedlichen Randabständen von der Außenkante des Außenrands in die Oberfläche des Außenrands eingreifend angeordnet sein. Die Rastzähne können jedoch auch auf einer selben Höhe in gleichem Randabstand von der Außenkante des Außenrands positioniert sein und lediglich die vorspringenden Zahnvorderkanten in unterschiedlichen Randabständen von der Außenkante des Außenrands in die Oberfläche des Außenrands eingreifen. So können die Rastzähne beispielsweise unterschiedlich lange Federzungen aufweisen, deren Federzungengrund auf einer selben Höhe in gleichem Randabstand von der Außenkante des Außenrands positioniert sind und aufgrund der unterschiedlich langen Federzungen die an den freien Enden der Federzungen angeordneten Zahnvorderkanten in unterschiedlichen Randabständen von der Außenkante des Außenrands in die Oberfläche des Außenrands eingreifen.

Eine oder mehrere Stirnleisten können an einem oberen Außenrand und/oder an einem unteren Außenrand des Innenbehälters positioniert sein. Wenn das Kältegerät mehrere Innenbehälter oder einen Innenbehälter mit mehreren Innenräumen aufweist, kann eine Stirnleiste alternativ oder ergänzend zwischen den Innenräumen positioniert sein, d.h. die Stirnleiste verbindet zwei Außenränder zweier Innenbehälter.

Die Rastzähne können zumindest annähernd über die gesamte Länge des Klemmteils verteilt angeordnet sein. Damit wird eine sichere Fixierung des Klemmteils über die gesamte Länge bzw. Breite des Außenrands des Innenbehälters gewährleistet.

Erfindungsgemäß, sind die Rastzähne gruppenweise angeordnet und jede Gruppe von Rastzähnen weist mehrere von der Außenkante unterschiedlich weit beabstandete Rastzähne auf. Damit wird gewährleistet, dass auch bei einem unregelmäßig ausgebildeten Rand des Innenbehälters in jeder Gruppe von Rastzähnen, diese mit dem Rand in Eingriff stehen. Unter gruppenweiser Anordnung wird verstanden, dass die Rastzähne einer Gruppe geringere Abstände voneinander aufweisen, als der Abstand zweier benachbarter Gruppen von Rastzähnen beträgt.

Die Rastzähne einer Gruppe können jeweils symmetrisch, insbesondere punktsymmetrisch oder spiegelsymmetrisch am Klemmteil angeordnet sein. Damit wird bei einer Montage ein gleichmäßiges und positionsgenaues Fügen ermöglicht. Beim Fügen der Stirnleiste auf den Außenrand des Innenbehälters kann das Auftreten quer gerichteter resultierender Kräfte, die zu einer Verschiebung zwischen Stirnleiste und Innenbehälter in Längsrichtung der Stirnleiste führen könnten, reduziert oder sogar verhindert werden.

Die Rastzähne einer Gruppe können jeweils bogenförmig, pfeilförmig oder wellenförmig angeordnet sein. Damit können beim Fügen der Stirnleiste auf den Außenrand des Innenbehälters zunächst nur einzelne Rastzähne, nachfolgend mehr Rastzähne und schließlich eine Vielzahl von Rastzähnen mit dem Rand in Eingriff gelangen.

Bezogen auf den Abstand der Rastzähne von der Außenkante können die Rastzähne in mehreren Reihen angeordnet sein. Damit wird über die Länge des Klemmteils eine gleichmäßige Fixierung, auch bereits während dem Fügen der Stirnleiste auf den Außenrand des Innenbehälters, erreicht. Eine Herstellung kann einfach erfolgen.

Die Rastzähne können durch zum Boden des U-förmigen Querschnittsabschnitts hin gerichtete Ausstellungen der Federlasche gebildet sein. Die Rastzähne weisen dadurch eine besonders hohe Haltekraft auf. Beim Fügen der Stirnleiste auf den Außenrand des Innenbehälters können die Ausstellungen einfedern und so ein Fügen erleichtern. Entgegen der Fügerichtung drücken sich die Ausstellungen an den Außenrand des Innenbehälters und verkrallen sich an diesem, sodass die Stirnleiste sicher gehalten ist. Die Ausstellungen sind sehr einfach und kostengünstig herstellbar.

Die Rastzähne können unterschiedlich weit über die Oberfläche der Federlasche hervorstehen. Damit kann eine Anpassung an eine variierende Spaltbreite zwischen Oberfläche der Federlasche und freiem Rand des Innenbehälters erfolgen. Beispielsweise kann ein sicherer Halt der Stirnleiste auch bei einem gewellten oder ungleichmäßig dicken Rand gewährleistet werden.

Die Klemmeinrichtung kann als extrudiertes oder spritzgegossenes Kunststoff- oder Aluminiumprofil oder als Biegeteil, insbesondere Blechbiegeteil, insbesondere Blechbiegeteil ausgebildet sein. Die Rastzähne können beim Urformen oder durch bereichsweises Umformen der Klemmeinrichtung gebildet sein. Damit kann eine effiziente Herstellung auch in größeren Stückzahlen erfolgen.

Zusammenfassend und mit anderen Worten dargestellt kann sich somit durch die Erfindung unter anderem eine besonders sichere Fixierung der Stirnleiste für ein Kühlgerät ergeben. Das so genannte Grundgerüst des Kühlgeräts im Wesentlichen kann aus einem Kühlgutbehälter, aus Stirnleisten, die oben und unten auf dem Kühlbehälter montiert werden, bei zweitürigen Geräten auch in der Mitte zwischen den beiden Kühlgutbehältern, zwei Seitenwänden, links und rechts am Gerät, und aus einer Rückwandpappe, die das Gerät auf der Rückseite bzw. oben und unten abschließt, bestehen. Die Stirnleisten können Stanzbiegeteile aus Stahlblech sein. Sie können grundlegende Gerätebauteile des Kältegeräts bilden und können somit auch insbesondere die folgenden Funktionen abdecken: An ihnen können Hinterlegteile befestigt sein, an denen die Türscharniere und die Seitenwände angeschraubt werden, sie können zusammen mit den Seitenwänden die Ober-/Unterkante des Kältegeräts bilden, sie können als eine Aufnahme dienen bzw. ein Trägerteil für unterschiedliche elektronische Komponenten, wie z.B. die Bedienelektronik, Sensoren und Lichtschalter bilden und/oder zusammen mit den Seitenwänden an der Gerätefront eine metallische Auflagefläche für die magnetische Türdichtung bilden.

Aus diesen Punkten kann unter Anderem folgen, dass die Position der Stirnleisten maßgeblich den Abstand der Türscharniere und auch die Gesamtgerätehöhe an der Frontseite vorgeben kann.

Die Montage der oben genannten Teile kann sich beispielsweise wie folgt gestalten. Auf dem Randwulst des Kühlgutbehälters werden die Stirnleisten oben und unten bzw. auch in der Mitte bei zweitürigen Geräten aufgedrückt. Dies geschieht entweder automatisch und maßgenau über eine Aufpressvorrichtung oder über einen Mitarbeiter, der die Leisten per Hand aufdrückt. Danach läuft diese Baugruppe über die Montagelinie, Fördertechnik aus Rollenbändern, und es werden die restlichen Teile angebaut. Gegen Ende dieser "Vormontage" werden die Seitenwände montiert und mit den Stirnleisten verschraubt. Um diese Verschraubung zu ermöglichen, müssen die Bauteile erst zueinander ausgerichtet werden, damit die Schraublöcher konzentrisch anliegen. Dies geschieht durch den Mitarbeiter, der anschließend die Schrauben eindreht.

Zur Fixierung auf dem Behälterrandwulst kann das Blechteil federförmig gestaltet sein. Dadurch entsteht eine Klemmwirkung und es können darüber hinaus Toleranzen der Behälterdicke ausgeglichen werden. Gegen das Lösen der Teile sind auf dem Federelement Widerhaken ausgestellt. Diese "verkrallen" sich leicht im Randwulst des Kühlgutbehälters und fixieren die Leiste.

Die grundlegende Geometrie der Stirnleiste kann gegenüber bekannten Stirnleisten unverändert oder zumindest nur geringfügig verändert sein. Die Erfindung kann insbesondere die Anzahl, Ausbildung und Anordnung der Widerhaken auf der Feder betreffen. Die Widerhaken oder auch Zähne könne über die ganze Breite des Federelements verteilt werden. Die Zähne können in einer bogenförmigen Anordnung auf der Feder verteilt sein. Dies führt dazu, dass unabhängig von der Einschubtiefe des Behälters in die Feder, die durch Toleranzen des Randbeschnitts variieren kann, immer Zähne im Eingriff im Randwulst des Kühlgutbehälters sind. Dadurch ist ein Verkrallen der Leiste mit dem Behälter und im gleichen Zug eine Fixierung der Verbindung auch bei schwankenden Toleranzen immer gewährleistet.

Die Anzahl der Zähne innerhalb eines Bogens sowie die Anzahl der Bögen selbst und die Größe eines Bogens kann variiert werden. Möglich ist hier ebenfalls eine von der Bogengeometrie abweichende Anordnung, bei der die Zähne auf der Feder versetzt angeordnet sind, bspw. pfeilförmig, wellenförmig etc. Es ist somit möglich, die Verbindung an die jeweiligen Randbedingungen optimal anzupassen. Weiterhin kann der Randwulst durch die bogenförmige Anordnung an verschiedenen Stellen fixiert werden. Dies bringt eine weitere Verbesserung der Fixierung des Gesamtsystems, denn es können Unebenheiten und Abweichungen der Geometrie des Randwulstes kompensiert werden.

Durch die Vielzahl der Widerhaken, die an unterschiedlichen Stellen des Randwulstes im Eingriff sind, ist es möglich, für die Zähne eine individuelle Zahnlänge zu bestimmen. Demzufolge wird die Anzahl der optimal im Eingriff liegenden Zähne nochmals erhöht.

Insbesondere ergeben sich folgende Vorteile. Eine sichere Fixierung des Kühlgutbehälters mit den Stirnleisten. Die Verbindung der Teile ist weniger toleranzempfindlich. Die Stirnleisten können maßgenau aufgepresst werden und bleiben danach in ihrer Position. Die Baugruppe von Stirnleisten und Kühlgutbehälter bleibt trotz äußerer Einflüsse, wie Transport auf Fördertechnik, andere Montageschritte, etc., maßhaltig, was für viele nachfolgende Montageprozesse und die Automatisierung der Fertigung vorteilhaft ist. Der Arbeitsschritt des Ausrichtens der Teile zueinander, um eine Schraubverbindung herzustellen, entfällt. Außerdem kann sich die Maßhaltigkeit der Baugruppe während des Montagevorgangs und des fertigen Gesamtgeräts verbessern.

Weitere Merkmale und Vorteile können sich aus der nachfolgenden Beschreibung eines Ausführungsbeispiels unter Bezugnahme auf die beigefügten Figuren ergeben. Konkrete Merkmale dieses Ausführungsbeispiels können allgemeine Merkmale der Erfindung darstellen.

Es zeigen schematisch und beispielhaft:
- Fig. 1: eine perspektivische Ansicht eines Haushaltskältegeräts aufweisend ein Gerätebauteil mit Stirnleisten und wärmeisolierten Innenbehältern mit kühlbaren Innenräumen,
- Fig. 2: eine obere Stirnleiste mit Klemmeinrichtung, das mehrere, in Gruppen bogenförmig angeordnete Rastzähne aufweist in perspektivischer Ansicht,
- Fig. 3: eine Detailansicht eines U-förmigen Querschnittsabschnitts einer Klemmeinrichtung mit Rastzähnen und
- Fig. 4: eine Detailansicht eines U-förmigen Querschnittsabschnitts einer Klemmeinrichtung mit Rastzähnen an einem Außenrand eines Innenbehälters eines Haushaltskältegeräts.

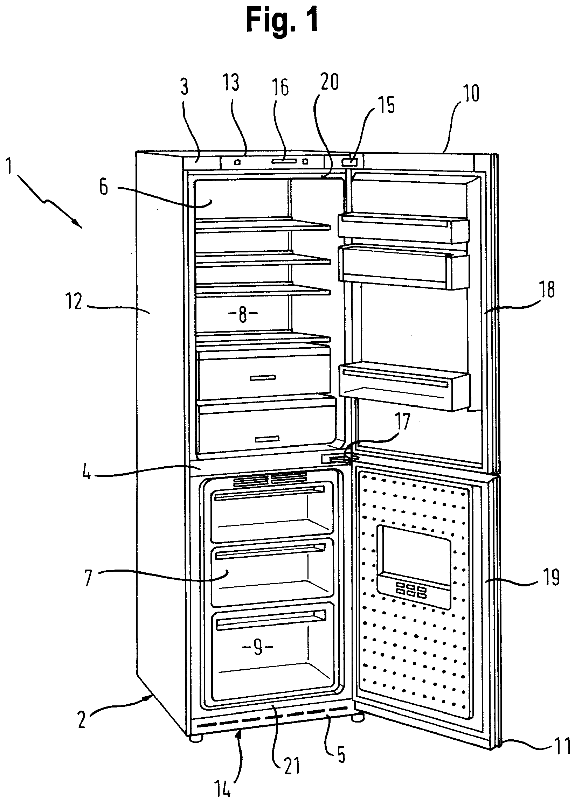

Fig. 1 zeigt eine perspektivische Ansicht eines Haushaltskältegeräts 1 als Beispiel eines Kältegeräts aufweisend ein Gerätebauteil 2 mit Stirnleisten 3, 4, 5 und wärmeisolierte Innenbehälter 6, 7 mit kühlbaren Innenräumen 8, 9 für Kühlgut. Zur Kühlung ist eine hier nicht gezeigte Kältemaschine vorgesehen, die den Innenräumen 8, 9 beim Betrieb Wärme entzieht und nach außen abgibt. Gegebenenfalls kann den Innenräumen 8, 9 auch Feuchtigkeit entzogen werden. Die Kältemaschine kann insbesondere als Kältemittelkreislauf mit wenigstens einem Verdichter, einem Verflüssiger und einem Verdampfer ausgeführt sein.

Bei dem in Fig. 1 dargestellten Haushaltskältegerät 1 sind die Innenbehälter 6, 7 übereinander in dem Gehäuse 2 aufgenommen. Der oben angeordnete Innenbehälter 6 bildet einen Kühlraum 8, der unten angeordnete Innenbehälter bildet einen Gefrierraum 9. Bei einer anderen Ausführung kann auch der oben angeordnete Innenbehälter einen Gefrierraum und der unten angeordnete Innenbehälter einen Kühlraum bilden. Alternativ kann der Innenbehälter auch einteilig ausgeführt sein und den Kühlraum 9 und den Gefrierraum 8 umfassen.

Der Kühlraum 8 dient im Allgemeinen zum frostfreien Kühlen von Kühlgut, vorzugsweise bei Temperaturen zwischen +4 und +8 °C. Der Kühlraum 8 kann jedoch auch als NullGrad-Fach, insbesondere zum Frischhalten von Obst oder Gemüse ausgebildet sein oder ein solches umfassen. Der Kühlraum 8 weist eine Rückwand auf, hinter der ein erster Verdampfer angeordnet ist. Der erste Verdampfer dient zum Kühlen des Kühlraums 8. Der Kühlraum 8 ist bei geöffnetem Kühlraumtürblatt 10 von vorne zugänglich. Zum Öffnen weist das Kühlraumtürblatt 10 einen ersten Griff auf.

Der Gefrierraum 9 dient im Allgemeinen zum Tiefgefrieren von Kühlgut bei ca. -18 °C. Dem Gefrierraum 9 ist ein zweiter Verdampfer zugeordnet, der hinter einer Gefrierraumrückwand angeordnet ist. Der Gefrierraum 9 ist bei geöffnetem Gefrierraumtürblatt 11 zugänglich. Zum Öffnen weist das Gefrierraumtürblatt 11 einen zweiten Griff auf.

Das Gehäuse 2 des Haushaltskältegeräts 1 weist zwei Seitenwände 12 rechts und links am Gerät 1, eine Rückwand, eine obere Deckwand 13, eine Bodenplatte 14 sowie eine obere Stirnleiste 3, eine mittlere Stirnleiste 4 und eine untere Stirnleiste 5 auf.

Vorliegend sind die Stirnleisten 3, 4, 5 Stanzbiegeteile aus Stahlblech. An den Stirnleisten 3, 4, 5 können Hinterlegteile befestigt sein, an denen Türscharniere, wie 15, und die Seitenwände 12 angeschraubt sind. Die obere Stirnleiste 3 bildet mit den Seitenwänden 12 eine Oberkante des Haushaltskältegeräts 1, die untere Stirnleiste 5 bildet zusammen mit den Seitenwänden 12 eine Unterkante des Haushaltskältegeräts 1. Die obere Stirnleiste 3 bildet eine Aufnahme und dient als Trägerteil für eine Bedien- und Anzeigeeinrichtung 16. Die mittlere Stirnleiste 4 dient als Aufnahme und Trägerteil für einen Lichtschalter 17. Die Stirnleisten 3, 4, 5 können Aufnahmen und Trägerteil für weitere elektronische Komponenten, wie bspw. elektronische Bauteile oder Sensoren, bilden. Zusammen mit den Seitenwänden 12 bilden die Stirnleisten 3, 4, 5 an der Front des Haushaltskältegeräts 1 eine metallische Auflagefläche für magnetische Türdichtungen 18, 19.

Die Position der Stirnleisten 3, 4, 5 gibt maßgeblich den Abstand der Türscharniere, wie 15, sowie die Gesamthöhe des Haushaltskältegeräts 1 an der Frontseite vor. Bei der Montage des Haushaltskältegeräts 1 werden zunächst auf Randwulste 20, 21 der Innenbehälter 6, 7 die Stirnleisten 3, 4, 5 oben und unten sowie in der Mitte aufgedrückt. Dieser Montageschritt erfolgt entweder automatisiert und maßgenau mittels einer Aufpressvorrichtung oder manuell durch einen Werker. Nachfolgend kann diese Baugruppe zwecks Anbaus weiterer Teile mittels einer Fördereinrichtung weiter transportiert werden. In einem späteren Montageschritt werden die Seitenwände 12 montiert und mit den Stirnleisten 3, 4, 5 verschraubt. Bevor diese Verschraubung erfolgt, werden die Bauteile 3, 4, 5, 12 so zueinander ausgerichtet, dass zu verschraubende Schraubenlöcher fluchten.

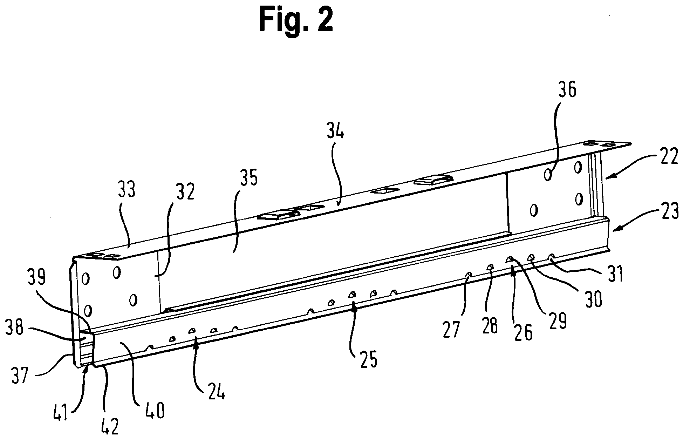

Fig. 2 zeigt eine obere Stirnleiste 22 mit Klemmeinrichtung 23, das mehrere, in Gruppen 24, 25, 26 bogenförmig angeordnete Rastzähne, wie 27, 28, 29, 30, 31, aufweist, in perspektivischer Ansicht von hinten. Die Stirnleiste 22 ist als Profil L-förmig ausgebildet, wobei ein längerer Schenkel 32 eine Vorderseite und ein kürzerer Schenkel 33 eine Oberseite 34 bildet. Ein Ausschnitt 35 dient zur Aufnahme einer Anzeige- und Bedieneinrichtung. Bohrungen, wie 36, dienen zum Anschrauben der Stirnleiste 22 an einem Trägerprofil des Gehäuses des Haushaltskältegeräts.

Rückseitig ist an dem längeren Profilschenkel 32 die Klemmeinrichtung 23 ausgebildet oder befestigt, das zusammen mit dem Schenkelende 37 eine Nut 38 bildet. Ausgehend von dem Schenkel 32 setzt die Klemmeinrichtung 23 zunächst rechtwinklig mit einem kürzeren Bodenabschnitt 39 an und setzt sich dann zum Schenkelende 37 hin eingezogen mit einer längeren Federlasche 40 fort, sodass eine Engstelle 41 zur Befestigung der Stirnleiste 22 an einem Randwulst eines Innenbehälters eines Haushaltskältegeräts gebildet ist. Die Federlasche 40 kann von dem Schenkelende 37 weg federn, um den Randwulst des Innenbehälters des Haushaltskältegeräts aufzunehmen. Dabei ist die Nut 38 so bemessen, dass eine Aufnahme des Randwulstes unter Vorspannung erfolgen kann.

Um ein Aufdrücken der Klemmeinrichtung 23 zu erleichtern und um eine Versteifung zu erreichen, ist eine Außenkante 42 der Klemmeinrichtung 23 endseitig von dem Schenkelende 37 weg gebogen.

Die Rastzähne, wie 27, 28, 29, 30, 31, sind in Gruppen 24, 25, 26 angeordnet über die Länge der Klemmeinrichtung 23 verteilt angeordnet. Jede Gruppe 24, 25, 26 von Rastzähnen, wie 27, 28, 29, 30, 31, umfasst mehrere Rastzähne, wie 27, 28, 29, 30, 31. Die Rastzähne, wie 27, 28, 29, 30, 31, einer Gruppe 24, 25, 26 sind von der Außenkante 42 der Klemmeinrichtung 23 unterschiedlich weit beabstandet. Vorliegend weisen die Rastzähne 27, 31 einen geringen, die Rastzähne 28, 30 einen mittleren und das Halteelement 29 ein großen Abstand von der Außenkante 42 der Klemmeinrichtung 23 auf. Die Rastzähne einer jeden Gruppe 24, 25, 26 sind symmetrisch, vorliegend in einer zur Außenkante 42 der Klemmeinrichtung 23 hin offenen Bogenform angeordnet. Jedes Halteelement, wie 27, 28, 29, 30, 31, ist als schräg nach innen, zum Schenkel 32 und zum Boden der Nut 38 hin gerichtete Ausstellung ausgebildet.

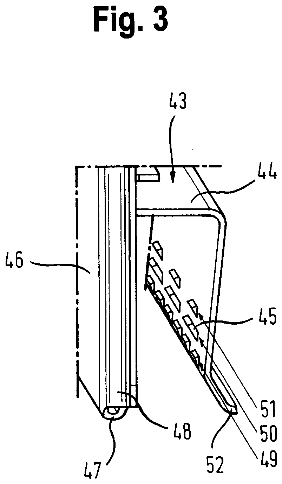

Fig. 3 zeigt eine Detailansicht eines U-förmigen Querschnittsabschnitts 43 einer Klemmeinrichtung 44 mit Rastzähnen, wie 45. Aus Fig. 3 ist ersichtlich, dass die Stirnleiste 46 aus einem Blech mit umgebördelten Kanten 47, 48 gebildet ist. Die Rastzähne, wie 45, sind in drei Reihen 49, 50, 51 von der äußeren Außenkante 52 der Klemmeinrichtung 44 unterschiedlich weit beabstandet angeordnet. Die Reihe 49 weist einen geringen, die Reihe 50 einen mittleren und die Reihe 51 ein großen Abstand von der Außenkante 52 der Klemmeinrichtung 44 auf. Die Klemmeinrichtung 44 ist vorliegend ein von der Stirnleiste 46 zunächst gesondertes Bauteil, das nachfolgend mit der Stirnleiste 46 verbunden wird. Zur Verbindung von Klemmeinrichtung 44 und Stirnleiste 46 kann die Klemmeinrichtung 44 mittels der umgebördelten Kanten 47, 48 fixiert sein. Alternativ können die Klemmeinrichtung 44 und die Stirnleiste 46 auch einstückig ausgebildet sein.

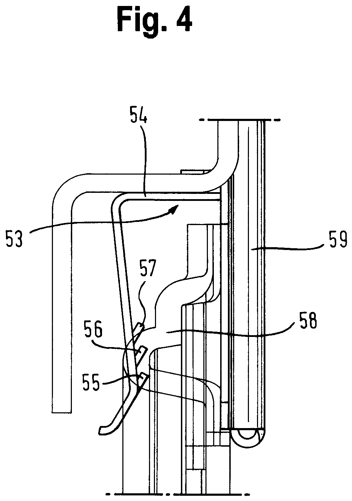

Fig. 4 zeigt eine Detailansicht eines U-förmigen Querschnittsabschnitts 53 einer Klemmeinrichtung 54 mit Rastzähnen 55, 56, 57 an einem Außenrand 58 eines Innenbehälters eines Haushaltskältegeräts in seitlicher Ansicht. Die Rastzähne 55, 56 stehen in Eingriff mit dem Außenrand 58 des Innenbehälters und sorgen für einen sicheren Halt der Stirnleiste 59, das Rastzähne 57 befindet sich in der gezeigten Position nicht in Eingriff.

## Patentansprüche

1. Kältegerät, insbesondere Haushaltskältegerät, aufweisend einen wärmeisolierten, einen kühlbaren Innenraum (8, 9) begrenzenden, ein erstes Gerätebauteil bildenden Innenbehälter (6, 7), an dem ein rahmenartig umlaufender, eine Oberfläche aufweisender Außenrand (20, 21, 58) ausgebildet ist, wenigstens ein weiteres Gerätebauteil (2) und eine den Innenbehälter (6, 7) mit dem weiteren Gerätebauteil (2) verbindende Stirnleiste (3, 4, 5, 22), die zu ihrer Befestigung an dem Außenrand (20, 21, 58) des Innenbehälters (6, 7) eine Klemmeinrichtung (23, 44,54) aufweist, die eine den Außenrand (20, 21, 58) des Innenbehälters (6, 7) an ihrer Außenkante (42, 52) umgreifende Federlasche (37, 40) umfasst, **dadurch gekennzeichnet, dass** die Federlasche (37, 40) an einer der Oberfläche des Außenrands (20, 21, 58) zuweisenden Innenwand der Federlasche (37, 40) mehrere Rastzähne (27, 28, 29, 30, 31, 45, 55, 56, 57) aufweist, dass die Rastzähne (27, 28, 29, 30, 31, 45, 55, 56, 57) ausgebildet sind, in unterschiedlichen Randabständen von der Außenkante (42, 52) des Außenrands (20, 21, 58) in die Oberfläche des Außenrands (20, 21, 58) einzugreifen und dass die Rastzähne (27, 28, 29, 30, 31, 45, 55, 56, 57) gruppenweise angeordnet sind und jede Gruppe (24, 25, 26) von Rastzähnen (27, 28, 29, 30, 31, 45, 55, 56, 57) mehrere von der Außenkante (42, 52) unterschiedlich weit beabstandete Rastzähne (27, 28, 29, 30, 31, 45, 55, 56, 57) aufweist, wobei die Rastzähne (27, 28, 29, 30, 31, 45, 55, 56, 57) einer Gruppe geringere Abstände voneinander aufweisen, als der Abstand zweier benachbarter Gruppen von Rastzähnen (27, 28, 29, 30, 31, 45, 55, 56, 57) beträgt.

2. Kältegerät nach Anspruch 1, **dadurch gekennzeichnet, dass** die Rastzähne (27, 28, 29, 30, 31, 45, 55, 56, 57) zumindest annähernd über die gesamte Länge des Klemmteils (23, 44,54) verteilt angeordnet sind.

3. Kältegerät nach einem der vorhergehenden Ansprüche, **dadurch gekennzeichnet, dass** die Rastzähne (27, 28, 29, 30, 31, 45, 55, 56, 57) einer Gruppe (24, 25, 26) jeweils symmetrisch angeordnet sind.

4. Kältegerät nach einem der vorhergehenden Ansprüche, **dadurch gekennzeichnet, dass** die Rastzähne (27, 28, 29, 30, 31, 45, 55, 56, 57) einer Gruppe (24, 25, 26) jeweils bogenförmig, pfeilförmig oder wellenförmig angeordnet sind.

5. Kältegerät nach einem der vorhergehenden Ansprüche, **dadurch gekennzeichnet, dass** bezogen auf den Abstand der Rastzähne (27, 28, 29, 30, 31, 45, 55, 56, 57) von der Außenkante (42, 52) die Rastzähne (27, 28, 29, 30, 31, 45, 55, 56, 57) in mehrere Reihen (49, 50, 51) angeordnet sind.

6. Kältegerät nach einem der vorhergehenden Ansprüche, **dadurch gekennzeichnet, dass** die Rastzähne (27, 28, 29, 30, 31, 45, 55, 56, 57) durch zum Boden (39) eines U-förmigen Querschnittsabschnitts (43, 53) des Klemmteils (23, 44,54) hin gerichteten Ausstellungen der Federlasche (40) gebildet sind.

7. Kältegerät nach einem der vorhergehenden Ansprüche, **dadurch gekennzeichnet, dass** die Rastzähne (27, 28, 29, 30, 31, 45, 55, 56, 57) unterschiedlich weit über die Oberfläche der Federlasche (40) hervorstehen.

8. Kältegerät nach einem der vorhergehenden Ansprüche, **dadurch gekennzeichnet, dass** die Klemmeinrichtung (23, 44,54) als extrudiertes oder spritzgegossenes Kunststoff- oder Aluminiumprofil oder als Biegeteil, insbesondere Blechbiegeteil ausgebildet ist.

9. Kältegerät nach einem der vorhergehenden Ansprüche, **dadurch gekennzeichnet, dass** die Rastzähne (27, 28, 29, 30, 31, 45, 55, 56, 57) beim Urformen oder durch bereichsweises Umformen der Klemmeinrichtung (23, 44,54) gebildet sind.

## Claims

1. Refrigeration appliance, in particular household refrigeration appliance, having a thermally insulating inner container (6, 7) which delimits a coolable interior chamber (8, 9) and forms a first appliance component, on which a frame-like peripheral outer rim (20, 21, 58) having a surface is embodied, at least one further appliance component (2) and a front area strip (3, 4, 5, 22) which connects the inner container (6, 7) to the further appliance component (2) and, to fasten it to the outer rim (20, 21, 58) of the inner container (6, 7), has a clamping facility (23, 44, 54), which comprises a resilient bracket (37, 40) which encompasses the outer rim (20, 21, 58) of the inner container (6, 7) at its outer edge (42, 52), **characterised in that** the resilient bracket (37, 40) has a plurality of latching teeth (27, 28, 29, 30, 31, 45, 55, 56, 57) on an inner wall of the resilient bracket (37, 40) facing towards the surface of the outer rim (20, 21, 58), that the latching teeth (27, 28, 29, 30, 31, 45, 55, 56, 57) are embodied to engage into the surface of the outer rim (20, 21, 58) at different rim spacings from the outer edge (42, 52) of the outer rim (20, 21, 58) and that the latching teeth (27, 28, 29, 30, 31, 45, 55, 56, 57) are arranged in groups and each group (24, 25, 26) of latching teeth (27, 28, 29, 30, 31, 45, 55, 56, 57) has a plurality of latching teeth (27, 28, 29, 30, 31, 45, 55, 56, 57) which are spaced apart from the outer edge (42, 52) to different extents, wherein the latching teeth (27, 28, 29, 30, 31, 45, 55, 56, 57) of one group have smaller spacings apart from one another than the spacing between two adjacent groups of latching teeth (27, 28, 29, 30, 31, 45, 55, 56, 57).

2. Refrigeration appliance according to claim 1, **characterised in that** the latching teeth (27, 28, 29, 30, 31, 45, 55, 56, 57) are arranged such that they are distributed at least approximately over the entire length of the clamping part (23, 44, 54).

3. Refrigeration appliance according to one of the preceding claims, **characterised in that** the latching teeth (27, 28, 29, 30, 31, 45, 55, 56, 57) of one group (24, 25, 26) are arranged symmetrically in each case.

4. Refrigeration appliance according to one of the preceding claims, **characterised in that** the latching teeth (27, 28, 29, 30, 31, 45, 55, 56, 57) of one group (24, 25, 26) are arranged in an arc, arrow or wave-shaped manner.

5. Refrigeration appliance according to one of the preceding claims, **characterised in that**, in relation to the spacing between the latching teeth (27, 28, 29, 30, 31, 45, 55, 56, 57) and the outer edge (42, 52), the latching teeth (27, 28, 29, 30, 31, 45, 55, 56, 57) are arranged in a plurality of rows (49, 50, 51).

6. Refrigeration appliance according to one of the preceding claims, **characterised in that** the latching teeth (27, 28, 29, 30, 31, 45, 55, 56, 57) are formed by positions of the resilient bracket (40) such that it is oriented towards the bottom (39) of a U-shaped cross-section portion (43, 53) of the clamping part (23, 44, 54).

7. Refrigeration appliance according to one of the preceding claims, **characterised in that** the latching teeth (27, 28, 29, 30, 31, 45, 55, 56, 57) protrude over the surface of the resilient bracket (40) to different extents.

8. Refrigeration appliance according to one of the preceding claims, **characterised in that** the clamping facility (23, 44, 54) is embodied as an extruded or injection-moulded plastic or aluminium profile or as a bent part, in particular a bent sheet part.

9. Refrigeration appliance according to one of the preceding claims, **characterised in that** the latching teeth (27, 28, 29, 30, 31, 45, 55, 56, 57) are formed when primary forming, or by reforming in sections, the clamping facility (23, 44, 54).

## Revendications

1. Appareil frigorifique en particulier appareil frigorifique ménager présentant un récipient intérieur (6, 7) thermiquement isolé, limitant un espace intérieur réfrigérable (8, 9) et formant un premier composant de l'appareil, sur lequel est réalisé un bord extérieur (20, 21, 58) qui l'encadre et comportant une surface, au moins un autre composant de l'appareil (2) et un bandeau frontal (3, 4, 5, 22) reliant le récipient intérieur (6, 7) à l'autre composant de l'appareil (2), lequel présente, pour sa fixation au bord extérieur (20, 21, 58) du récipient intérieur (6, 7), un dispositif de serrage (23, 44, 54) qui comprend une patte élastique (37, 40) enserrant le bord extérieur (20, 21, 58) du récipient intérieur (6, 7) au niveau de son arête extérieure (42, 52), **caractérisé en ce que** cette patte élastique (37, 40) présente, sur une paroi intérieure de la patte élastique (37, 40) tournée vers la surface du bord extérieur (20, 21, 58), plusieurs crans (27, 29, 30, 31, 45, 55, 56, 57),
**en ce que** ces crans (27, 28, 29, 30, 31, 45, 55, 56, 57) sont réalisés pour se mettre en prise à différentes distances de l'arête extérieure (42, 52) du bord extérieur (20, 21, 58) dans la surface du bord extérieur (20, 21, 58) et **en ce que** ces crans (27, 28, 29, 30, 31, 45, 55, 56, 57) sont disposés par groupe et chaque groupe (24, 25, 26) de crans (27, 28, 29, 30, 31, 45, 55, 56, 57) présente plusieurs crans (27, 28, 29, 30, 31, 45, 55, 56, 57) différemment espacés de l'arête extérieure (42, 52), ces crans (27, 28, 29, 30, 31, 45, 55, 56, 57) d'un groupe présentant des distances plus faibles l'une de l'autre que compte la distance de deux groupes voisins de crans (27, 28, 29, 30, 31, 45, 55, 56, 57).

2. Appareil frigorifique selon la revendication 1, **caractérisé en ce que** les crans (27, 28, 30, 31, 45, 55, 56, 57) sont agencés répartis au moins sur à peu près toute la longueur de la pièce de serrage (23, 44,54).

3. Appareil frigorifique selon l'une des revendications précédentes, **caractérisé en ce que** les crans (27, 28, 29, 30, 31, 45, 55, 56, 57) d'un groupe (24, 25, 26) sont disposés chacun symétriquement.

4. Appareil frigorifique selon l'une des revendications précédentes, **caractérisé en ce que** les crans (27, 28, 29, 30, 31, 45, 55, 56, 57) d'un groupe (24, 25, 26) sont disposés chacun en arc de cercle, en flèche ou de manière ondulée.

5. Appareil frigorifique selon l'une des revendications précédentes, **caractérisé en ce que**, sur base de la distance des crans (27, 28, 29, 30, 31, 45, 55, 56, 57) de l'arête extérieure (42, 52), les crans (27, 28, 29, 30, 31, 45, 55, 56, 57) sont disposés en plusieurs rangées (49, 50, 51).

6. Appareil frigorifique selon l'une des revendications précédentes, **caractérisé en ce que** les crans (27, 28, 29, 30, 31, 45, 55, 56, 57) sont formés à travers les expositions de la patte élastique (40) dirigées vers le bas (39) d'une section en coupe (43, 53) de la pièce de serrage (23, 44,54).

7. Appareil frigorifique selon l'une des revendications précédentes, **caractérisé en ce que** les crans (27, 28, 29, 30, 31, 45, 55, 56, 57) ressortent de manière variable au-dessus de la surface de la patte élastique (40).

8. Appareil frigorifique selon l'une des revendications précédentes, **caractérisé en ce que** le dispositif de serrage (23, 44,54) est réalisé comme un profilé en matière synthétique ou en aluminium extrudé ou moulé par injection ou comme une tôle pliée, en particulier en pièce de tôle pliée.

9. Appareil frigorifique selon l'une des revendications précédentes, **caractérisé en ce que** les crans (27, 28, 29, 30, 31, 45, 55, 56, 57) sont formés par usinage primaire ou déformation localisée du dispositif de serrage (23, 44,54).
